# EUROPÄISCHE PATENTSCHRIFT

(11) **EP 0 358 277 B1**
(45) Veröffentlichungstag und Bekanntmachung des Hinweises auf die Patenterteilung: **30.11.1994**
(21) Anmeldenummer: 89202244.3
(22) Anmeldetag: 06.09.1989
(51) Int. Cl.: G11C 11/406

(54) **In ein Informationsverarbeitungsgerät einführbarer Speichermodul und Verwendung eines solchen Speichermoduls in einem Informationsverarbeitungsgerät**
Memory module insertable in an information-processing device, and use of such a memory module in an information-processing device
Module de mémoire enfichable dans un appareil de traitement d'information et utilisation d'un tel module de mémoire dans un appareil de traitement d'information

(30) Priorität: 09.09.1988 AT 2217/88
(43) Veröffentlichungstag der Anmeldung: 14.03.1990
(73) Patentinhaber: Philips Electronics N.V., 5621 BA Eindhoven (NL)
(72) Erfinder: Höllerbauer, Werner, NL-5656 AA Eindhoven (NL)
(74) Vertreter: Strijland, Wilfred

(56) Entgegenhaltungen:
- PATENT ABSTRACTS OF JAPAN, Bd. 12, Nr. 216 (P-719) 21. Juni 1988;& JP-A-63013197
- PATENT ABSTRACTS OF JAPAN, Bd. 8, Nr. 271 (P-320) 12. Dezember 1984;& JP-A-59140591

## Beschreibung

Die Erfindung betrifft einen in ein Informationsverarbeitungsgerät einführbaren Speichermodul, der eine zumindest teilweise willkürlich ansprechbare Speichervorrichtung zur Speicherung digitaler Informationssignale, eine Zugriffseinrichtung zur Speichervorrichtung zum seriellen Zugreifen zu einer Reihe von Speicherstellen in der Speichervorrichtung zum Schreiben beziehungsweise Lesen in diesen Speicherstellen im wesentlichen zwischen einer Anfangsadresse und einer Endadresse, und eine Batterie zu seiner Speisung bei vom Informationsverarbeitungsgerät getrenntem Speichermodul enthält. Derartige Speichermodule sind in verschiedenen Ausführungsformen bekannt. Beispielsweise kann ein solcher Speichermodul quaderförmig nach Art einer Tonbandkassette ausgebildet sein. Vielfach sind solche Speichermodule auch kartenförmig ausgebildet, als sogenannte Chipkarten, wie dies beispielsweise in der EP-OS 0 231 090 gezeigt ist. Solche Speichermodule dienen zur Speicherung von Informationssignalen, wobei gewährleistet sein muß, daß bei vom Informationsverarbeitungsgerät getrenntem Speichermodul die Speicherinhalte nicht verlorengehen. Hiezu werden bei Chipkarten, die besonders flach ausgebildet sein sollen, als Speichervorrichtung vielfach EEPROM-Bausteine verwendet, da diese ihre Speicherinhalte auch bewahren, wenn dem Speichermodul keine Versorgungsspannung zugeführt wird, so daß es sich erübrigt in den Speichermodul eine Batterie einzubauen. Derartige EEPROM-Bausteine sind aber relativ teuer, so daß für derartige Zwecke auch vielfach statische RAM-Bausteine verwendet werden, die zwar zum Erhalt ihrer Speicherinhalte eine Versorgungsspannung benötigen, aber einen nur geringen Stromverbrauch haben, so daß die im Speichermodul erforderliche Batterie eine relativ lange Lebensdauer hat. Solche statische RAM-Bausteine sind zwar billiger als EEPROM-Bausteine, aber auch noch relativ teuer.

Aus JP-A- 63 013 197 ist es bekannt, zur Verbesserung der Verfügbarkeit eines dynamischen Speichers nur die benutzten Speicherbereiche aufzufrischen.

Die Erfindung hat sich zum Ziel gesetzt, einen Speichermodul der eingangs angeführten Gattung so auszubilden, daß er in seinem Aufbau einfach und billig ist und die in ihm verwendete Batterie eine lange Lebensdauer hat. Erfindungsgemäß ist hiezu vorgesehen, daß die Speichervorrichtung als eine Auffrischung benötigende Speichervorrichtung ausgebildet ist, die mit einer Auffrischeinrichtung zum Auffrischen der in der Speichervorrichtung gespeicherten Informationssignale zusammenwirkt, daß die Auffrischvorrichtung weitere Speichereinrichtungen aufweist, in welche beim Schreiben in die Speicherstellen der Speichervorrichtung von der Zugriffseinrichtung zu derselben und von einem Steuerschaltkreis her gesteuert Kennzeichnungen von Anfangsadressen und Endadressen gespeichert werden, und daß in Abhängigkeit dieser Kennzeichnungen von Anfangsadressen und Endadressen über eine Auffrischsteuereinrichtung gesteuert die zwischen einem Paar von Anfangsadressen und Endadressen liegenden Speicherstellen der Speichervorrichtung zeitgemäß aufgefrischt werden, wobei die außerhalb eines Paares von Anfangsadressen und Endadressen liegenden Speicherstellen der Speichervorrichtung keine Auffrischung erfahren. Durch die Verwendung einer eine Auffrischung benötigenden Speichervorrichtung nach einem ersten Merkmal der Erfindung ist erreicht, daß der Speichermodul einfach und billig hergestellt werden kann, da derartige eine Auffrischung benötigende Speichervorrichtungen preisgünstiger sind als statische RAM-Bausteine oder EEPROM-Bausteine. Eine Auffrischung benötigende Speichervorrichtungen haben aber den Nachteil, daß sie zum Auffrischen ihrer Speicherinhalte relativ viel Energie benötigen, was für die im Speichermodul verwendete Batterie bedeuten würde, daß ihre Lebensdauer relativ kurz wäre. Nach einem weiteren Merkmal der Erfindung ist daher vorgesehen, daß von den Speicherstellen der eine Auffrischung benötigenden Speichervorrichtung im wesentlichen nur diejenigen Speicherstellen zeitgemäß aufgefrischt werden, in denen Informationssignale gespeichert sind, wogegen die anderen Speicherstellen nicht zeitgemäß aufgefrischt werden. Auf diese Weise wird ein wesentlicher Betrag an Energie, der zum Auffrischen auch der nicht belegten Speicherstellen erforderlich wäre, eingespart und damit die Lebensdauer der im Speichermodul verwendeten Batterie wesentlich erhöht. Insgesamt gesehen gewährleisten die erfindungsgemäßen Maßnahmen daher eine einfache und billige Herstellung des Speichermoduls, wobei außerdem eine relativ lange Lebensdauer für die im Speichermodul verwendete Batterie erreicht wird.

Als vorteilhaft hat sich hiebei erwiesen, wenn die eine Auffrischung benötigende Speichervorrichtung durch eine dynamische RAM-Vorrichtung gebildet ist. Eine solche dynamische RAM-Vorrichtung ist willkürlich ansprechbar, wodurch ein Auffrischen nur der tatsächlich belegten Speicherstellen möglich ist.

Als vorteilhaft hat sich aber auch erwiesen, wenn die eine Auffrischung benötigende Speichervorrichtung aus mindestens zwei Speicherblöcken zusammengesetzt ist, die blockmäßig willkürlich ansprechbar und durch Ladungsübertragungsspeicher gebildet sind. Solche Ladungsübertragungsspeicher sind besonders preisgünstig erhältlich und benötigen für ihr Auffrischen auch relativ wenig Energie, so daß sich der Umstand, daß sie nur blockweise aufgefrischt werden können, nicht nachteilig auswirkt. Beispielsweise kann als solcher Ladungsübertragungsspeicher ein sogenannter CCD-Baustein, der auch "Charge Coupled Device" genannt wird, verwendet werden.

Weiters hat sich hiebei als vorteilhaft erwiesen, wenn die weiteren Speichereinrichtungen für die Speicherung der Kennzeichnungen von Anfangsadressen und Endadressen durch einen separaten Registersatz gebildet sind. Durch die Verwendung einer solchen separaten Speichereinrichtung für die Speicherung der Kennzeichnungen von Anfangsadressen und Endadressen ergibt sich eine relativ einfache Datenverwaltung, wobei auch gewährleistet ist, daß erforderliche Änderungen in der Abspeicherung der Kennzeichnungen von Anfangsadressen und Endadressen einfach und sicher durchführbar sind.

Bei der Ausbildung der eine Auffrischung benötigenden Speichervorrichtung als dynamische RAM-Vorrichtung hat sich aber auch als vorteilhaft erwiesen, wenn die weiteren Speichereinrichtungen für die Speicherung der Kennzeichnungen von Anfangsadressen und Endadressen aus reservierten Speicherstellen der dynamischen RAM-Vorrichtung bestehen, deren Speicherinhalte nacheinander in ein Latch übertragen werden, das seinerseits die Auffrischsteuereinrichtung steuert. Durch die Verwendung einzelner reservierter Speicherstellen der dynamischen RAM-Vorrichtung selbst für die Speicherung der Kennzeichnungen von Anfangsadressen und Endadressen wird erreicht, daß hiefür keine separaten Speichereinrichtungen erforderlich sind, wodurch sich ein besonders einfacher Aufbau ergibt.

In diesem Zusammenhang hat sich weiters als vorteilhaft erwiesen, wenn die reservierten Speicherstellen in vorbestimmten, gleichmäßig gestaffelten Adressen der dynamischen RAM-Vorrichtung liegen. Auf diese Weise wird ebenfalls eine einfache Datenverwaltung zum Auffrischen der Speicherstellen der dynamischen RAM-Vorrichtung erhalten, wobei dann das Auffrischen blockweise in jeweils gleichen Blöcken erfolgt.

Als vorteilhaft hat sich erwiesen, wenn dem Steuerschaltkreis über einen separaten Eingang ein Löschsignal zum Löschen von in den weiteren Speichereinrichtungen gespeicherten Kennzeichnungen von Anfangsadressen und Endadressen zuführbar ist. Auf diese Weise wird ein einfaches Löschen von in der Speichervorrichtung gespeicherten Informationssignalen erreicht, da dies einfach dadurch geschieht, daß die betreffenden Speicherstellen der Speichervorrichtung nicht mehr aufgefrischt werden.

Vorteilhafterweise kann ein solcher Speichermodul als Chipkarte ausgebildet sein. Dies wird dadurch ermöglicht, daß bei der erfindungsgemäßen Ausbildung des Speichermoduls durch die Verwendung einer eine Auffrischung benötigenden Speichervorrichtung eine relativ dünne Batterie verwendet werden kann, da sie erfindungsgemäß energiesparend verwendet wird und daher eine relativ lange Lebensdauer hat. Wie eingangs erwähnt, sind als Chipkarten ausgebildete Speichermodule an sich bekannt, in welchen aber andere Speichervorrichtungen verwendet werden, die nicht als eine Auffrischung benötigende Speichervorrichtungen ausgebildet sind.

Weiters betrifft die Erfindung die Verwendung eines erfindungsgemäß ausgebildeten Speichermoduls in einem speziellen Informationsverarbeitungsgerät. Erfindungsgemäß wird hiebei der Speichermodul im Zusammenhang mit einem Informationsverarbeitungsgerät verwendet, welches als Diktiergerät ausgebildet ist, wobei die zu speichernden Informationssignale Sprachsignale sind, die zu ihrer Speicherung im Speichermodul in digitale Signale umgewandelt werden. Da ein erfindungsgemäß ausgebildeter Speichermodul auch zur Speicherung größerer Informationsmengen sehr gut geeignet ist, kann er auf diese Weise vorteilhaft als leicht auswechselbares Speichermedium für Diktiergeräte verwendet werden, dies in analoger Weise zu den bekannten Tonbandkassetten, wobei sich jedoch ein wesentlich einfacherer Aufbau für das Diktiergerät ergibt, da dieses keine relativ aufwendige Mechanik mehr benötigt, um einen Aufzeichnungsträger entsprechend der verschiedenen Betriebsarten des Gerätes von einem Motor her anzutreiben.

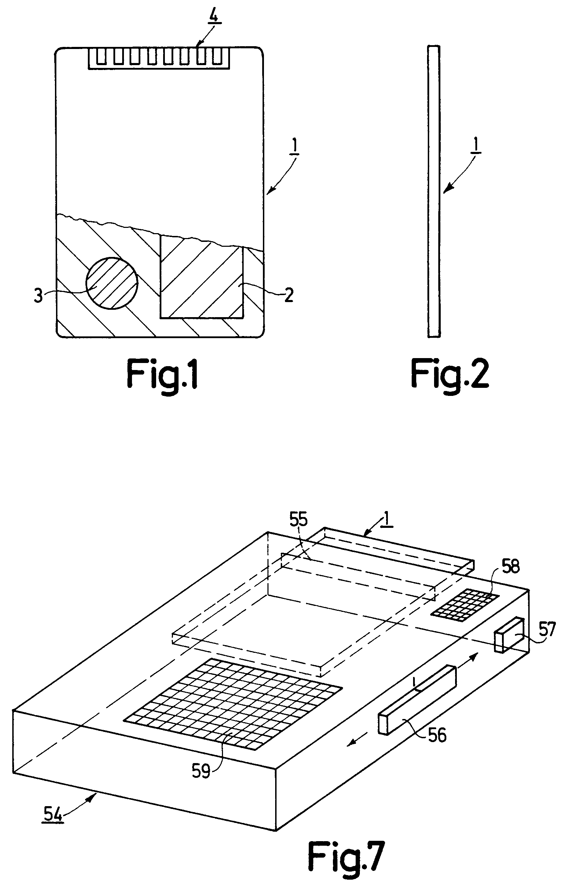

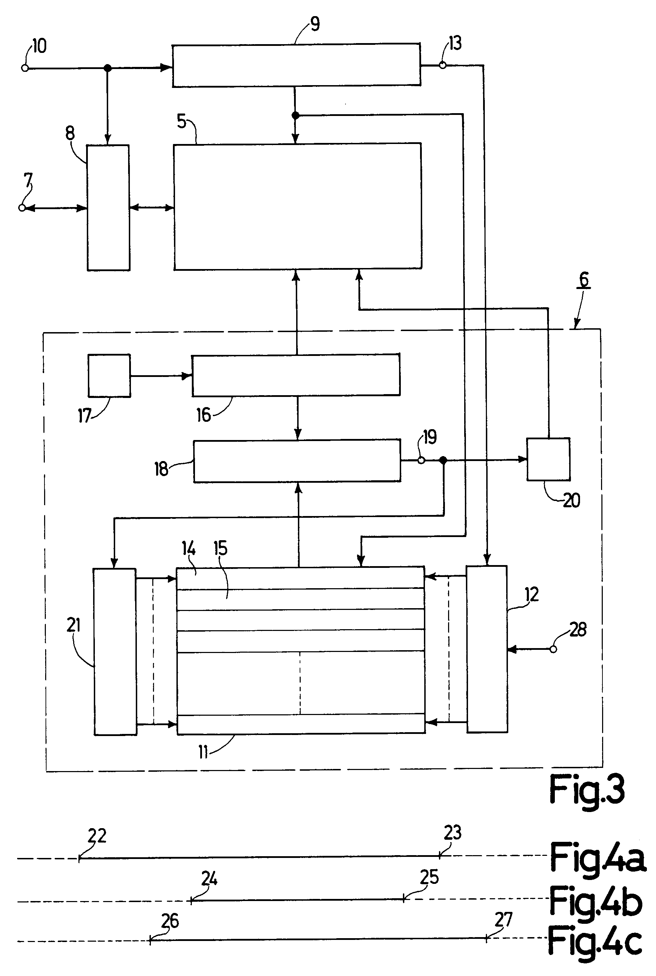

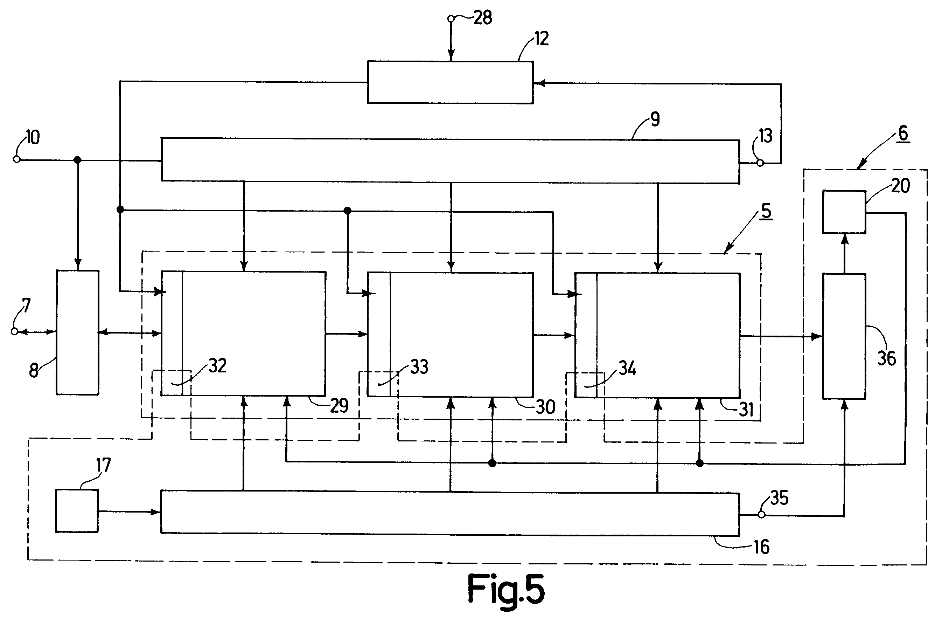

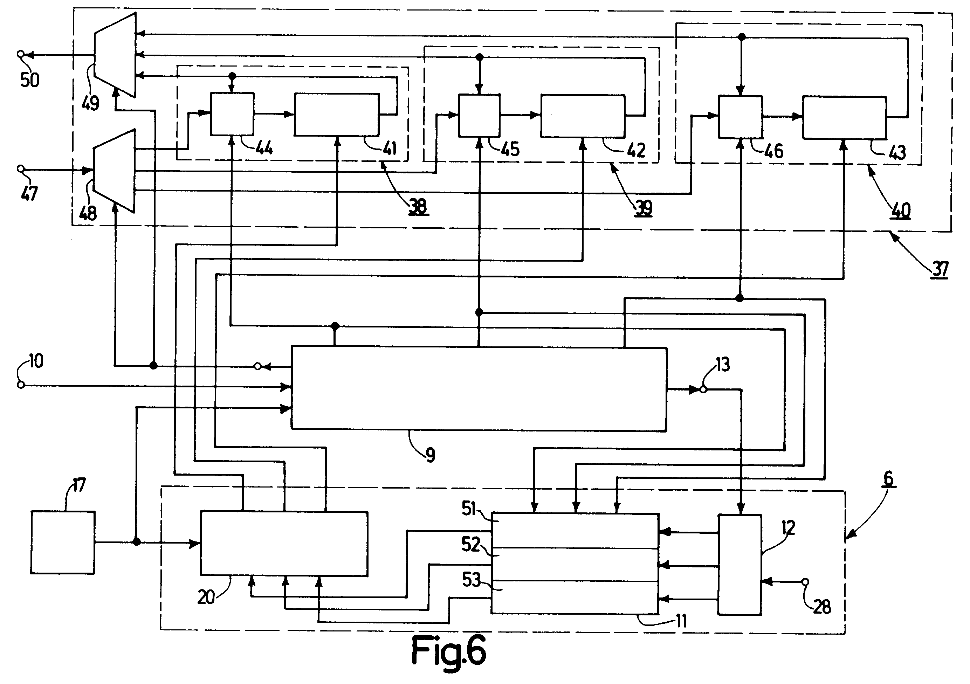

Die Erfindung wird im folgenden anhand der Zeichnungen, in welchen einige Ausführungsbeispiele der Erfindung dargestellt sind, auf die sie jedoch nicht beschränkt sein soll, näher erläutert. Fig.1 zeigt in Draufsicht und teilweise im Schnitt einen Speichermodul, der als Chipkarte ausgebildet ist. Fig.2 zeigt den Speichermodul nach Fig.1 in Seitenansicht. Fig.3 zeigt ein Blockschaltbild eines ersten Ausführungsbeispieles, bei dem als eine Auffrischung benötigende Speichervorrichtung eine dynamische RAM-Vorrichtung verwendet ist und als weitere Speichereinrichtungen für die Speicherung der Kennzeichnungen von Anfangsadressen und Endadressen ein separater Registersatz dient. Die Figuren 4a, b und c zeigen Diagramme zur Erläuterung verschiedener Möglichkeiten für das Ändern von in der dynamischen RAM-Vorrichtung gemäß Fig.3 gespeicherten Informationssignalen. Fig.5 zeigt ein Blockschaltbild eines zweiten Ausführungsbeispieles, bei dem wieder als eine Auffrischung benötigende Speichervorrichtung eine dynamische RAM-Vorrichtung verwendet ist, wobei aber als weitere Speichereinrichtungen für die Speicherung der Kennzeichnungen von Anfangsadressen und Endadressen reservierte Speicherstellen der dynamischen RAM-Vorrichtung selbst verwendet werden. Fig.6 zeigt ein Blockschaltbild eines weiteren Ausführungsbeispieles, bei dem die eine Auffrischung benötigende Speichervorrichtung aus drei Speicherblöcken zusammengesetzt ist, die durch Ladungsübertragungsspeicher gebildet sind. Fig.7 zeigt die Verwendung eines Speichermoduls in einem Diktiergerät.

In den Figuren 1 und 2 ist mit 1 ein als Chipkarte ausgebildeter Speichermodul bezeichnet. Die Chipkarte besteht hiebei aus einem Kunststoffteil, in den die elektrischen beziehungsweise elektronischen Bauteile des Speichermoduls eingebettet sind. Von diesen Bauteilen sind in Fig.1 schematisch eine zumindest teilweise willkürlich ansprechbare Speichervorrichtung 2 und eine Batterie 3 dargestellt. An einem Rand der Chipkarte ist eine Kontaktreihe 4 vorgesehen, deren Kontakte mit der Schaltung des Speichermoduls in Verbindung stehen und dazu dienen elektrische Verbindungen zu einem Informationsverarbeitungsgerät herstellen zu können, in das die Chipkarte als Speichermodul einführbar ist. Als Speichervorrichtung 2 wird dabei eine Auffrischung benötigende Speichervorrichtung verwendet, da solche Speichervorrichtungen im Handel preisgünstig erhältlich sind, wodurch die Herstellungskosten für die Chipkarte niedrig gehalten werden können. Solche eine Auffrischung benötigende Speichervorrichtungen 2 können beispielsweise dynamische RAM-Vorrichtungen oder Ladungsübertragungsspeicher sein. Bei vom Informationsverarbeitungsgerät getrennter Chipkarte sorgt dann die in ihr untergebrachte Batterie 3 dafür, daß die in der eine Auffrischung benötigenden Speichervorrichtung 2 gespeicherten Informationssignale mittels einer hiefür vorgesehenen Auffrischeinrichtung erhalten bleiben. Derartige eine Auffrischung benötigende Speichervorrichtungen haben jedoch den Nachteil, daß sie zum Auffrischen der in ihren Speicherstellen gespeicherten Informationssignale, damit diese insbesondere bei vom Informationsverarbeitungsgerät getrennter Chipkarte erhalten bleiben, relativ viel Energie benötigen, was sich natürlich ungünstig auf die Lebensdauer der verwendeten Batterie 3 auswirken würde. Um diesen Nachteil zu beseitigen, sind nun spezielle Maßnahmen vorgesehen, die ein Auffrischen der Speichervorrichtung mit relativ geringem Energieverbrauch ermöglichen, wie dies nachfolgend anhand einiger Ausführungsbeispiele beschrieben wird.

Im Blockschaltbild nach Fig.3 ist angenommen, daß die im Speichermodul vorgesehene, eine Auffrischung benötigende Speichervorrichtung durch eine dynamische RAM-Vorrichtung 5 gebildet ist, die mit einer Auffrischeinrichtung 6 zusammenwirkt. Die im Speichermodul zu speichernden digitalen Informationssignale, im folgenden auch kurz Daten genannt, werden einem Anschluß 7 des Speichermoduls zugeführt, von dem her sie in ein Datenregister 8 gelangen, das seinerseits mit der dynamischen RAM-Vorrichtung 5 zusammenwirkt. Dieses Datenregister 8 dient auch zum Entnehmen der in der dynamischen RAM-Vorrichtung 5 gespeicherten Daten, die dann wieder am Anschluß 7 zur Verfügung stehen. Zum seriellen Zugreifen zu den Speicherstellen in der dynamischen RAM-Vorrichtung 5 zum Schreiben beziehungsweise Lesen in diesen Speicherstellen dient eine Zugriffseinrichtung 9, der zusammen mit dem Datenregister 8 von einem Anschluß 10 des Speichermoduls her Steuersignale zugeführt werden. Eine solche Zugriffseinrichtung 9 besteht üblicherweise aus einem Schreib-Lese-Adressenzähler. Das Schreiben der Daten einzelner Informationsabschnitte in die Speicherstellen der dynamischen RAM-Vorrichtung 5 erfolgt dabei jeweils zwischen Anfangsadressen und Endadressen, die von der Zugriffseinrichtung 9 festgelegt werden. Auf diese Weise sind verschiedene Informationsabschnitte jeweils zwischen einem Paar von Anfangsadressen und Endadressen festgelegt.

Die Auffrischeinrichtung 6 weist weitere Speichereinrichtungen auf, die im vorliegenden Fall durch einen separaten Registersatz 11 gebildet sind, in den beim Schreiben in die Speicherstellen der dynamischen RAM-Vorrichtung 5 von der diesbezüglichen Zugriffseinrichtung 9 und von einem Steuerschaltkreis 12 her gesteuert Kennzeichnungen von Anfangsadressen und Endadressen gespeichert werden. Wird von der Zugriffseinrichtung 9 eine Anfangsadresse festgelegt, so wird dies an einem Ausgang 13 der Zugriffseinrichtung 9 dem Steuerschaltkreis 12 signalisiert, der dann seinerseits für diese Anfangsadresse beziehungsweise deren Kennzeichnung einen Speicherplatz festlegt, der wie hier angenommen mit 14 im Registersatz 11 bezeichnet ist, in dem dann von der Zugriffseinrichtung 9 her diese Anfangsadresse beziehungsweise deren Kennzeichnung gespeichert wird. Wird nach der darauffolgenden Speicherung der einem Informationgsabschnitt angehörenden Daten in der dynamischen RAM-Vorrichtung 5 von der Zugriffseinrichtung 9 nunmehr eine Endadresse festgelegt, so wird dies wieder über den Ausgang 13 der Zugriffseinrichtung 9 dem Steuerschaltkreis 12 signalisiert, was diesen veranlaßt, den nächstfolgenden Speicherplatz im Registersatz 11, der hier mit 15 bezeichnet ist, auszuwählen, in dem dann von der Zugriffseinrichtung 9 her diese Endadresse beziehungsweise deren Kennzeichnung gespeichert wird. Dieser Vorgang wiederholt sich für jeden in der dynamischen RAM-Vorrichtung 5 zu speichernden Informationsabschnitt, so daß dann im Registersatz 11 aufeinanderfolgend in dessen einzelnen Speicherplätzen jeweils ein Paar von Anfangsadressen und Endadressen gespeichert sind. Auf diese Weise ist genau festgelegt, in welchen Speicherstellen der dynamischen RAM-Vorrichtung 5 Daten gespeichert sind.

Die Auffrischeinrichtung 6 weist weiters in üblicher Weise eine weitere Zugriffseinrichtung 16 zur dynamischen RAM-Vorrichtung 5 auf, die von einem Taktgenerator 17 gesteuert und beispielsweise durch einen Auffrisch-Adressenzähler gebildet wird. Die durch die weitere Zugriffseinrichtung 16 bestimmte Adresse in der dynamischen RAM-Vorrichtung 5 wird von der weiteren Zugriffseinrichtung 16 an einen in der Auffrischeinrichtung 6 weiters vorgesehenen Komparator 18 weitergeleitet, der diese Adresse mit einer bestimmten im Registersatz 11 festgelegten Adresse vergleicht, wobei er jeweils mit der ersten gespeicherten Anfangsadresse beginnt. Stellt der Komparator 18 Gleichheit zwischen der von der weiteren Zugriffseinrichtung 16 ausgegebenen Adresse und der betreffenden im Registersatz 11 gespeicherten Adresse fest, so gibt der Komparator 18 an einem Ausgang 19 ein Steuersignal ab, das einer in der Auffrischeinrichtung 6 weiters vorgesehenen Auffrischsteuereinrichtung 20 zugeführt wird, die ihrerseits mit der dynamischen RAM-Vorrichtung 5 zusammenwirkt und bewirkt, daß ab dem Zeitpunkt der Feststellung der Gleichheit der beiden Adressen im Komparator 18 die darauffolgenden Speicherstellen in der dynamischen RAM-Vorrichtung 5 aufgefrischt werden. Gleichzeitig wird ein solches am Ausgang 19 des Komparators 18 auftretendes Steuersignal auch einem dem Registersatz 11 zugeordneten Adressenzähler 21 zugeführt, der beim Auftreten eines solchen Steuersignales seinerseits veranlaßt, daß im Registersatz 11 den nächstfolgenden Speicherplatz weitergeschaltet wird, in dem die zur vorgenannten Anfangsadresse zugehörige Endadresse gespeichert ist, die dann wieder an den Komparator 18 angelegt wird. Sobald die weitere Zugriffseinrichtung 16 bei ihrem Weiterschalten von Adresse zu Adresse diese Endadresse erreicht, stellt der Komparator 18 wieder Gleichheit fest und gibt an seinem Ausgang 19 abermals ein Steuersignal ab, das wieder der Auffrischsteuereinrichtung 20 zugeführt wird und diese veranlaßt, das Auffrischen der Speicherstellen in der dynamischen RAM-Vorrichtung 5 zu unterbrechen. Dieses nunmehr am Ausgang 19 des Komparators 18 auftretende Steuersignal wird abermals dem Adressenzähler 21 zugeführt, was diesen veranlaßt, den nächstfolgenden Speicherplatz im Registersatz 11 auszuwählen und an den Komparator 18 anzulegen. In diesem Speicherplatz des Registersatzes 11 ist dann, wenn vorhanden, die nächstfolgende Anfangsadresse eines weiteren Informationsabschnittes gespeichert, was bedeutet, daß bis zum Erreichen dieser Adresse durch die weitere Zugriffseinrichtung 16 das Auffrischen der Speicherstellen in der dynamischen RAM-Vorrichtung 5 unterbrochen bleibt und erst danach wieder aufgenommen wird, bis wiederum die nächste Endadresse erreicht wird.

Wie ersichtlich, ist auf diese Weise erreicht, daß nur die zwischen einem Paar von Anfangsadressen und Endadressen liegenden Speicherstellen der dynamischen RAM-Vorrichtung 5 zeitgemäß aufgefrischt werden, wobei die außerhalb eines Paares von Anfangsadressen und Endadressen liegenden Speicherstellen der dynamischen RAM-Vorrichtung 5 keine Auffrischung erfahren. Dies bedeutet aber, daß sich in der Praxis die Anzahl der aufzufrischenden Speicherstellen der dynamischen RAM-Vorrichtung 5 wesentlich verringert, da unter üblichen Betriebsbedingungen nur sehr selten die gesamte Speicherkapazität der dynamischen RAM-Vorrichtung 5 benötigt beziehungsweise ausgenützt wird. Dies hat aber zur Folge, daß sich auch die für das Auffrischen der dynamischen RAM-Vorrichtung benötigte Energie verringert und somit die Lebensdauer der den Speichermodul speisenden Batterie verlängert wird. In der Praxis hat sich hiebei ergeben, daß auf diese Weise eine erhebliche Verlängerung der Lebensdauer der Batterie erreichbar ist.

Für die Organisation der Festlegung der Anfangsadressen und Endadressen beziehungsweise der Kennzeichnungen derselben besteht eine Reihe von Möglichkeiten, was anhand der Figuren 4a, b und c erläutert werden soll. In Fig.4a ist mit 22 eine Anfangsadresse und mit 23 eine Endadresse eines Informationsabschnittes bezeichnet, wobei man annehmen kann, daß die dazwischenliegenden Speicherstellen der dynamischen RAM-Vorrichtung 5 vollständig für die Speicherung dieses Informationsabschnittes ausgenützt werden. An einen solchen Abschnitt könnte dann beispielsweise unmittelbar ein weiterer Abschnitt anschließen, was hier nicht näher gezeigt ist. Nunmehr wird angenommen, daß in den zwischen der Anfangsadresse 22 und der Endadresse 23 gespeicherten Informationsabschnitt ein neuer Informationsabschnitt, wie in Fig.4b angegeben, gespeichert werden soll, der seinerseits kürzer ist als der vorhergehend gespeicherte Informationsabschnitt. Dieser neue Informationsabschnitt soll beispielsweise durch die Anfangsadresse 24 und die Endadresse 25 festgelegt sein. Hiebei kann nun vorgesehen werden, daß die Anfangsadresse 22 im Registersatz 11 gelöscht und durch die neue Anfangsadresse 24 ersetzt wird. Ebenso kann die Endadresse 23 gelöscht und durch die neue Endadresse 25 ersetzt werden. Auf diese Weise werden dann nur die zwischen der neuen Anfangsadresse 24 und der neuen Endadresse 25 liegenden Speicherstellen der dynamischen RAM-Vorrichtung 5 aufgefrischt, wobei automatisch die zwischen den Anfangsadressen 22 und 24 und den Endadressen 25 und 23 liegenden Speicherstellen der dynamischen RAM-Vorrichtung gelöscht werden, da sie keine Auffrischung mehr erfahren. Es wäre beispielsweise aber auch möglich, nachdem eine Feststellung getroffen wurde, daß die neuen Adressen 24 und 25 innerhalb des Bereiches der ursprünglichen Adressen 22 und 23 liegen, vorzusehen, daß für diesen Fall die ursprüngliche Anfangsadresse 22 und die ursprüngliche Endadresse 23 weiterhin für das Auffrischen der dazwischenliegenden Speicherstellen der dynamischen RAM-Vorrichtung 5 beibehalten wird, wobei die zwischen der ursprünglichen Anfangsadresse 22 und der ursprünglichen Endadresse 23 liegenden Speicherstellen der dynamischen RAM-Vorrichtung 5 mit den neuen Daten überschrieben werden. Anders liegt der Fall bei dem in Fig.4c angenommenen Beispiel, wo der durch eine Anfangsadresse 26 und eine Endadresse 27 festgelegt Informationsabschnitt über den durch die ursprüngliche Endadresse 23 festgelegten Informationsabschnitt hinausgeht. In diesem Fall ist eine zwangsweise Löschung der ursprünglichen Endadresse 23 erforderlich, die dann durch die neue Endadresse 27 zu ersetzen ist. Hinsichtlich der neuen Anfangsadresse 26 gilt analoges wie bei dem anhand von Fig.4b beschriebenen Fall, weil diese neue Anfangsadresse 26 wieder innerhalb des Bereiches der Adressen 22 und 23 liegt. Wie ersichtlich, ist es daher zweckmäßig, für die Verwaltung des Registersatzes 11 einen Sortiermechanismus für die Adressen vorzusehen. Eine andere Möglichkeit besteht darin, das Auffrischen der Speicherstellen in der dynamischen RAM-Vorrichtung 5 überhaupt blockweise vorzunehmen. Für einen solchen Fall könnten dann beispielsweise nur die höherwertigeren Bits der im Komparator 18 miteinander zu vergleichenden Adressen für einen solchen Vergleich herangezogen werden.

Das Löschen einer im Registersatz 11 gespeicherten Adresse beziehungsweise deren Kennzeichnung kann dadurch erfolgen, daß dem Steuerschaltkreis 12 über einen separaten Eingang 28 ein Löschsignal zugeführt wird. Durch das Löschen eines Paares von Anfangsadressen und Endadressen ist es aber auch möglich, den ganzen dazwischenliegenden Informationsabschnitt der in den Speicherstellen der dynamischen RAM-Vorrichtung 5 gespeichert ist, zu löschen, da durch das Löschen dieser Anfangsadressen und Endadressen auch das Auffrischen der dazwischenliegenden Speicherstellen in der dynamischen RAM-Vorrichtung 5 unterbunden wird, womit sich ein separates Löschen der betreffenden Speicherstellen der dynamischen RAM-Vorrichtung 5 erübrigt.

Im Blockschaltbild nach Fig .5 ist eine dynamische RAM-Vorrichtung 5 gezeigt, die aus mehreren Speicherblöcken, im vorliegenden Fall beispielsweise drei Speicherblöcken, die mit 29, 30 und 31 bezeichnet sind, besteht. Hiebei können diese Speicherblöcke je für sich eigene Bausteine sein oder es kann eine dynamische RAM-Vorrichtung in derartige Speicherblöcke intern aufgeteilt sein. Die zu speichernden Daten werden wieder einem Anschluß 7 des Speichermoduls zugeführt, von dem her sie in ein Datenregister 8 gelangen, das seinerseits wieder mit der dynamischen RAM-Vorrichtung 5 zusammenwirkt. Auch hier dient zum seriellen Zugreifen zu den Speicherstellen der dynamischen RAM-Vorrichtung 5 eine Zugriffseinrichtung 9, der zusammen mit dem Datenregister 8 von einem Anschluß 10 des Speichermoduls her Steuersignale zugeführt werden.

Die Auffrischeinrichtung 6 weist im vorliegenden Fall weitere Speichereinrichtungen für die Speicherung der Kennzeichnungen von Anfangsadressen und Endadressen auf, die aus reservierten Speicherstellen der dynamischen RAM-Vorrichtung 5 selbst bestehen. Diese reservierten Speicherstellen sind in Fig.5 schematisch mit 32, 33 und 34 bezeichnet, wobei jeweils eine dieser reservierten Speicherstellen einem der Speicherblöcke 29, 30 und 31 der dynamischen RAM-Vorrichtung 5 zugeordnet ist. Im vorliegenden Fall liegen diese reservierten Speicherstellen in vorbestimmten, gleichmäßig gestaffelten Adressen der dynamischen RAM-Vorrichtung 5. An sich wäre es aber auch möglich, diese reservierten Speicherstellen in beliebige Adressen der dynamischen RAM-Vorrichtung zu legen. In diese reservierten Speicherstellen 32, 33 und 34 werden beim Schreiben in die Speicherstellen der jeweiligen Speicherblöcke 29, 30 und 31 der dynamischen RAM-Vorrichtung 5 von der diesbezüglichen Zugriffseinrichtung 9 und wieder von einem Steuerschaltkreis 12 her gesteuert Kennzeichnungen von Anfangsadressen gespeichert, sobald in zumindest einem Teil der Speicherstellen des der reservierten Speicherstelle zugehörigen Speicherblockes 29, 30 oder 31 der dynamischen RAM-Vorrichtung 5 Daten gespeichert werden. Auf diese Weise bildet dann für einen bestimmten Speicherblock der dynamischen RAM-Vorrichtung die reservierte Speicherstelle des nachfolgenden Speicherblockes der dynamischen RAM-Vorrichtung gleichzeitig die Endadresse für den vorhergehenden Speicherblock der dynamischen RAM-Vorrichtung. Hiebei kann die Kennzeichnung der Anfangsadressen sehr einfach erfolgen, da lediglich gespeichert werden muß, ob die Speicherstellen des betreffenden Speicherblockes der dynamischen RAM-Vorrichtung in die Datenspeicherung einbezogen sind oder nicht. Wird von der Zugriffseinrichtung 9 eine derartige Anfangsadresse für einen Speicherblock der dynamischen RAM-Vorrichtung festgelegt, so wird dies vom Ausgang 13 der Zugriffseinrichtung 9 her dem Steuerschaltkreis 12 signalisiert, der dann seinerseits die betreffende reservierte Speicherstelle des zugehörigen Speicherblockes der dynamischen RAM-Vorrichtung mit der Kennzeichnung belegt.

Die Auffrischeinrichtung 6 weist wieder eine von einem Taktgenerator 17 gesteuerte weitere Zugriffseinrichtung 16 zur dynamischen RAM-Vorrichtung 5 auf, wobei hier von einem Ausgang 35 derselben ein Latch 36 gesteuert wird, das seinerseits die Auffrischsteuereinrichtung 20 für die dynamische RAM-Vorrichtung 5 steuert. Sobald von der weiteren Zugriffseinrichtung 16 eine Adresse bestimmt wird, welche einer der reservierten Speicherstellen 32, 33 oder 34 eines der Speicherblöcke 29, 30 oder 31 entspricht, wird an ihrem Ausgang ein Steuersignal an das Latch 36 abgegeben, demzufolge der Speicherinhalt dieser reservierten Speicherstelle in das Latch 36 übertragen wird. Beinhaltet diese reservierte Speicherstelle eine Kennzeichnung, daß der betreffende Speicherblock der dynamischen RAM-Vorrichtung zumindest teilweise mit Daten belegt ist, so bewirkt diese dann in das Latch 36 übertragene Kennzeichnung, daß über die Auffrischsteuereinrichtung 20 gesteuert nunmehr die darauffolgenden Speicherstellen in dem betreffenden Speicherblock der dynamischen RAM-Vorrichtung 5 aufgefrischt werden. Dieses Auffrischen erfolgt solange, bis von der weiteren Zugriffseinrichtung 16 die nächste reservierte Speicherstelle erfaßt wird, deren Speicherinhalt dann wieder in das Latch 36 übertragen wird. Beinhaltet diese nächste reservierte Speicherstelle eine Kennzeichnung, daß auch dieser Speicherblock der dynamischen RAM-Vorrichtung mit Daten belegt ist, so erfolgt auch weiterhin über die Auffrischsteuereinrichtung 20 gesteuert ein Auffrischen der Speicherstellen dieses Speicherblockes der dynamischen RAM-Vorrichtung. Dieser Vorgang geht solange weiter, bis von der weiteren Zugriffseinrichtung 16 eine reservierte Speicherstelle erfaßt wird, in der eine Kennzeichnung enthalten ist, die angibt, daß in dem betreffenden Speicherblock der dynamischen RAM-Vorrichtung keine Daten gespeichert sind. Das Übertragen dieser Kennzeichnung in das Latch 36 hat dann zur Folge, daß von diesem her die Auffrischsteuereinrichtung 20 im weiteren das Auffrischen der Speicherstellen dieses Speicherblockes der dynamischen RAM-Vorrichtung unterbricht. Eine derartige Unterbrechung des Auffrischens erfolgt solange, bis von der weiteren Zugriffseinrichtung 16 wieder eine reservierte Speicherstelle erfaßt wird, die eine Kennzeichnung beinhaltet, daß in den Speicherstellen des betreffenden Speicherblockes der dynamischen RAM-Vorrichtung Daten gespeichert sind.

Wie ersichtlich, erfolgt im vorliegenden Fall das Auffrischen der Speicherstellen der dynamischen RAM-Vorrichtung blockweise in Abhängigkeit davon, ob in dem jeweiligen Speicherblock Daten gespeichert sind oder nicht. Auf einfache Weise bildet dabei die in der reservierten Speicherstelle eines Speicherblockes enthaltene Kennzeichnung sowohl die Anfangsadresse für diesen Speicherblock als auch gleichzeitig die Endadresse für den vorhergehenden Speicherblock der dynamischen RAM-Vorrichtung, wodurch sich eine besonders einfache Datenverwaltung ergibt. Sollte es erwünscht sein, könnte natürlich auch im vorliegenden Fall jedes Ende eines Speicherblockes der dynamischen RAM-Vorrichtung mit einer separaten Kennzeichnung in einer reservierten Speicherstelle erfolgen.

Auch bei dem vorliegenden Ausführungsführungbeispiel wird somit eine Einsparung an Energie für das Auffrischen der Speicherstellen der dynamischen RAM-Vorrichtung erreicht, da nur diejenigen Speicherblöcke der dynamischen RAM-Vorrichtung aufgefrischt werden, in welchen Daten gespeichert sind.

Im Blockschaltbild nach Fig.6 ist die eine Auffrischung benötigende Speichervorrichtung mit 37 bezeichnet, die beispielsweise aus drei Speicherblöcken 38, 39 und 40 zusammengesetzt ist, die blockmäßig willkürlich ansprechbar und hier durch Ladungsübertragungsspeicher 41, 42 und 43 gebildet sind. Als Ladungsübertragungsspeicher können beispielsweise CCD-Bausteine, die auch "Charge Coupled Device" genannt werden, verwendet sein. Bei solchen Ladungsübertragungsspeichern erfolgt das Auffrischen der in ihnen gespeicherten Daten dadurch, daß von einem Taktgenerator 17 und einer Zugriffseinrichtung 9 her gesteuert die jeweils am Ausgang des Ladungsübertragungsspeichers auftretenden Daten wieder dem Eingang des Ladungsübertragungsspeichers zugeführt werden, was mit Hilfe von Schalteinrichtungen 44, 45 und 46 geschieht. Zur Speicherung der Daten eines Informationssignals werden diese von einem Eingang 47 der Speichervorrichtung einem Demultiplexer 48 zugeführt, der die Daten blockweise den einzelnen Speicherblöcken 38, 39 und 40 zuführt. Das Abfragen von in der Speichereinrichtung 37 gespeicherten Daten erfolgt in analoger Weise mit Hilfe eines Multiplexers 49, der die in den einzelnen Speicherblöcken gespeicherten Daten wieder zu einem Informationssignal zusammenfaßt, das dann an einem Ausgang 50 der Speichereinrichtung 37 zur Verfügung steht. Diese Vorgänge werden wieder von der Zugriffseinrichtung 9 gesteuert, der über einen Eingang 10 demgemäße Steuersignale zugeführt werden.

Ein Auffrischen der Daten in der Speichervorrichtung 37 erfolgt wieder mit Hilfe einer Auffrischeinrichtung 6. Die in dieser Auffrischeinrichtung 6 vorgesehenen weiteren Speichereinrichtungen sind hier wieder durch einen Registersatz 11 gebildet, der hier korrespondierend zu den drei Speicherblöcken 38, 39 und 40 der Speichervorrichtung 37 drei Speicherplätze 51, 52 und 53 aufweist. Die Auswahl dieser drei Speicherplätze erfolgt wieder mit Hilfe eines Steuerschaltkreises 12, dem von einem Ausgang 13 der Zugriffseinrichtung 9 her Steuersignale zugeführt werden, die angeben, in welchem der drei Speicherblöcke 38, 39 und 40 der Speichervorrichtung 37 Daten gespeichert sind, wobei dann von der Zugriffseinrichtung 9 her diesbezügliche Kennzeichnungen in den Speicherplätzen 51, 52 und 53 gespeichert werden. Bei diesen Kennzeichnungen handelt es sich wieder um die Festlegung einer Anfangsadresse, sobald einer der Speicherblöcke 38, 39 und 40 mit Daten belegt ist. Wie erwähnt, erfolgt die Auffrischung der in einem Speicherblock gespeicherten Daten dadurch, daß diese Daten laufend dem Ladungsübertragungsspeicher entnommen und wieder zugeführt werden. Somit bildet im vorliegenden Fall wieder eine Anfangsadresse der in einem Speicherblock gespeicherten Daten gleichzeitig die zugehörige Endadresse, da die Daten im Speicherblock in einer Schleife geführt werden. Die in den Speicherplätzen 51, 52 und 53 des Registersatzes 11 gespeicherten Kennzeichnungen geben demnach an, ob in dem zugeordneten Speicherblock Daten gespeichert sind, die aufgefrischt werden müssen. In Abhängigkeit dieser gespeicherten Kennzeichnungen erfolgt somit über die auch hier vorgesehene Auffrischsteuereinrichtung 20 das Auffrischen der in den Speicherblöcken 38, 39 und 40 gespeicherten Daten, wobei wieder nur diejenigen Speicherblöcke aufgefrischt werden, in denen Daten gespeichert sind. Auf diese Weise erfolgt auch hier wieder ein energiesparendes Auffrischen der in der Speichervorrichtung 37 insgesamt gespeicherten Daten.

Die im Vorstehenden beschriebenen Speichermodule sind auch zur Speicherung größerer Informationsmengen geeignet, wobei die in jedem Speichermodul enthaltene Batterie zufolge des energiesparend betriebenen Speichermoduls auch langfristig dafür sorgt, daß die Speicherinhalte erhalten bleiben und der Speichermodul daher auch langfristig funktionsfähig ist. Da solche Speichermodule auch leicht auswechselbar sind, eignen sie sich sehr gut zur Verwendung in einem Informationsverarbeitungsgerät, welches als Diktiergerät ausgebildet ist, wobei die zu speichernden Informationssignale dann Sprachsignale sind, die zu ihrer Speicherung im Speichermodul in digitale Signale umgewandelt werden. Hiebei wird der Vorteil erhalten, daß das mit einem solchen Speichermodul arbeitende Diktiergerät keine aufwendige Mechanik benötigt, da für seinen Betrieb keine von einem Motor her je nach der betreffenden Betriebsart des Gerätes antreibbaren Bauteile erforderlich sind, wie dies beispielsweise bei einem mit einer Tonbandkassette arbeitenden Diktiergerät der Fall ist.

Ein solches mit einem Speichermodul arbeitendes Diktiergerät zeigt Fig.7, welches im vorliegenden Fall als in der Hand zu haltendes Gerät ausgebildet ist. Das mit 54 bezeichnete, quaderförmig ausgebildete Gerät weist an einer Schmalseite einen Schlitz 55 auf, in den ein wie vorstehend beschriebener Speichermodul 1, einführbar ist, wobei dessen Kontaktreihe mit einer korrespondierenden Kontakteinrichtung im Gerät in Wirkverbindung tritt, wodurch elektrische Verbindungen zwischen dem Speichermodul und dem Gerät hergestellt werden. Mit einem am Gerät vorgesehenen, aus einer Stopstellung in zwei entgegengesetzte Richtungen verschiebbaren Schaltschieber 56 kann ein Durchlaufen der Speicherstellen der im Speichermodul enthaltenen Speichervorrichtung entweder in Richtung vorwärts oder rückwärts eingeschaltet werden. Mit einem weiteren Schalter 57 kann dabei zwischen einem Abfragen der in den Speicherstellen der Speichervorrichtung gespeicherter Daten und einem Speichern von Daten in den Speicherstellen der Speichervorrichtung umgeschaltet werden, dies entsprechend einer Wiedergabe beziehungsweise einer Aufnahme eines Sprachsignales. Zu speichernde akustische Sprachsignale gelangen über eine am Gerätegehäuse vorgesehene Mikrofoneintrittsöffnung 58 zu einem im Gerät angeordneten Mikrofon, das diese akustischen Signale in analoge elektrische Signale umwandelt, die dann wiederum in digitale Signale umgewandelt und schließlich als Daten im Speichermodul 1 gespeichert werden. Vom Speichermodul 1 abgefragte Daten werden wieder in analoge elektrische Signale umgewandelt, die dann von einem im Gerät angeordneten Lautsprecher über eine am Gerätegehäuse vorgesehene Schallaustrittsöffnung 59 als akustische Signale wiedergegeben werden. Ein auf diese Weise in einem in der Hand zu haltenden Diktiergerät besprochener Speichermodul kann dann beispielsweise dem Gerät entnommen und in ein stationäres, als Tischgerät ausgebildetes Diktiergerät eingesetzt werden, mit dem dann die im Speichermodul gespeicherten und von diesem wiedergegebenen Sprachsignale ausgewertet werden können.

Wie aus vorstehendem ersichtlich ist, besteht eine Reihe von Abwandlungen der beschriebenen Ausführungsbeispiele eines erfindungsgemäßen Speichermoduls, ohne daß dabei der Rahmen der Erfindung verlassen wird. Dies betrifft insbesondere die Ausbildung und Organisation der im Speichermodul zur Anwendung kommenden, eine Auffrischung benötigenden Speichervorrichtung sowie die diesbezügliche Datenverwaltung im Zusammenhang mit dem Auffrischen nur der zwischen bestimmten Anfangsadressen und Endadressen in der Speichervorrichtung gespeicherten Daten.

## Patentansprüche

1. In ein Informationsverarbeitungsgerät einführbarer Speichermodul, der eine zumindest teilweise willkürlich ansprechbare Speichervorrichtung zur Speicherung digitaler Informationssignale, eine Zugriffseinrichtung zur Speichervorrichtung zum seriellen Zugreifen zu einer Reihe von Speicherstellen in der Speichervorrichtung zum Schreiben beziehungsweise Lesen in diesen Speicherstellen im wesentlichen zwischen einer Anfangsadresse und einer Endadresse, und eine Batterie zu seiner Speisung bei vom Informationsverarbeitungsgerät getrenntem Speichermodul enthält, dadurch gekennzeichnet, daß die Speichervorrichtung als eine Auffrischung benötigende Speichervorrichtung ausgebildet ist, die mit einer Auffrischeinrichtung zum Auffrischen der in der Speichervorrichtung gespeicherten Informationssignale zusammenwirkt, daß die Auffrischeinrichtung weitere Speichereinrichtungen aufweist, in welche beim Schreiben in die Speicherstellen der Speichervorrichtung von der Zugriffseinrichtung zu derselben und von einem Steuerschaltkreis her gesteuert Kennzeichnungen von Anfangsadressen und Endadressen gespeichert werden, und daß in Abhängigkeit dieser gespeicherten Kennzeichnungen von Anfangsadressen und Endadressen über eine Auffrischsteuereinrichtung gesteuert die zwischen einem Paar von Anfangsadressen und Endadressen liegenden Speicherstellen der Speichervorrichtung zeitgemäß aufgefrischt werden, wobei die außerhalb eines Paares von Anfangsadressen und Endadressen liegenden Speicherstellen der Speichervorrichtung keine Auffrischung erfahren.

2. Speichermodul nach Anspruch 1, dadurch gekennzeichnet, daß die eine Auffrischung benötigende Speichervorrichtung durch eine dynamische RAM-Vorrichtung gebildet ist.

3. Speichermodul nach Anspruch 1, dadurch gekennzeichnet, daß die eine Auffrischung benötigende Speichervorrichtung aus mindestens zwei Speicherblöcken zusammengesetzt ist, die blockmäßig willkürlich ansprechbar und durch Ladungsübertragungsspeicher gebildet sind.

4. Speichermodul nach einem der vorhergehenden Ansprüche, dadurch gekennzeichnet, daß die weiteren Speichereinrichtungen für die Speicherung der Kennzeichnungen von Anfangsadressen und Endadressen durch einen separaten Registersatz gebildet sind.

5. Speichermodul nach Anspruch 2, dadurch gekennzeichnet, daß die weiteren Speichereinrichtungen für die Speicherung der Kennzeichnungen von Anfangsadressen und Endadressen aus reservierten Speicherstellen der dynamischen RAM-Vorrichtung bestehen, deren Speicherinhalte nacheinander in ein Latch übertragen werden, das seinerseits die Auffrischsteuereinrichtung steuert.

6. Speichermodul nach Anspruch 5, dadurch gekennzeichnet, daß die reservierten Speicherstellen in vorbestimmten, gleichmäßig gestaffelten Adressen der dynamischen RAM-Vorrichtung liegen.

7. Speichermodul nach einem der vorhergehenden Ansprüche, dadurch gekennzeichnet, daß dem Steuerschaltkreis über einen separaten Eingang ein Löschsignal zum Löschen von in den weiteren Speichereinrichtungen gespeicherten Kennzeichnungen von Anfangsadressen und Endadressen zuführbar ist.

8. Speichermodul nach einem der vorhergehenden Ansprüche, dadurch gekennzeichnet, daß der Speichermodul als Chipkarte ausgebildet ist.

9. Verwendung eines Speichermoduls nach einem der vorhergehenden Ansprüche in einem Informationsverarbeitungsgerät, welches als Diktiergerät ausgebildet ist, wobei die zu speichernden Informationssignale Sprachsignale sind, die zu ihrer Speicherung im Speichermodul in digitale Signale umgewandelt werden.

## Claims

1. A storage module which can be inserted into a data processing apparatus and which comprises an at least partly random accessible storage device for storing digital data signals, an access device for serially accessing a row of storage locations in the storage device in order to write and read in these storage locations essentially between a start address and a stop address, and a battery for powering the storage module when it is not connected to the data processing apparatus, characterized in that the storage device is constructed as a storage device requiring refreshment which cooperates with a refresh device for refreshing the data signals stored in the storage device, the refresh device comprising further storage devices in which, upon writing in the storage locations of the storage device, indications of start and stop addresses are stored from the access device, under the control of a control circuit, the storage locations of the storage device which are situated between a pair of start and stop addresses being timely refreshed in dependence on said indications of start and stop addresses and under the control of a refresh control device, the storage locations of the storage device which are situated outside a pair of start and stop addresses not being refreshed.

2. A storage module as claimed in Claim 1, characterized in that the storage device requiring refreshment is formed by a dynamic RAM device.

3. A storage module as claimed in Claim 1, characterized in that the storage device requiring refreshment is composed of at least two storage blocks which are block-wise accessible at random and which are formed by charge transfer memories.

4. A storage module as claimed in any one of the preceding Claims, characterized in that the further storage devices for the storage of the indications of start and stop addresses are formed by a separate set of registers.

5. A storage module as claimed in Claim 2, characterized in that the further storage devices for the storage of the indications of start and stop addresses consist of reserved storage locations of the dynamic RAM device whose contents are successively transferred to a latch which in its turn controls the refresh control device.

6. A storage module as claimed in Claim 5, characterized in that the reserved storage locations are situated at predetermined, uniformly spaced addresses of the dynamic RAM device.

7. A storage module as claimed in any one of the preceding Claims, characterized in that the control circuit can receive, via a separate input, an erase signal for erasing indications of start and stop addresses stored in the further storage devices.

8. A storage module as claimed in any one of the preceding Claims, characterized in that the storage module is constructed as a chip card.

9. The use of a storage module as claimed in any one of the preceding Claims in a data processing apparatus which is constructed as a dictating apparatus, the data signals to be processed being speech signals which are converted into digital signals for storage in the storage module.

## Revendications

1. Module de mémoire enfichable dans un appareil de traitement d'informations, qui contient un dispositif de mémoire susceptible de réagir au moins en partie de manière aléatoire pour mémoriser des signaux d'information numériques, un dispositif d'accès au dispositif de mémoire pour un accès sériel à une ligne d'emplacements de mémoire du dispositif de mémoire en vue d'écrire ou de lire dans ces emplacements de mémoire, en substance entre une adresse de départ et une adresse de fin, et une pile pour l'alimenter lorsque le module de mémoire est séparé de l'appareil de traitement d'informations, caractérisé en ce que le dispositif de mémoire se présente sous la forme d'un dispositif de mémoire nécessitant un rafraîchissement, qui coopère avec un dispositif de rafraîchissement pour rafraîchir les signaux d'information mémorisés dans le dispositif de mémoire, que le dispositif de rafraîchissement comporte d'autres dispositifs de mémoire dans lesquels, lors de l'écriture dans les emplacements de mémoire du dispositif de mémoire, des identifications d'adresses de début et d'adresses de fin commandées par le dispositif d'accès à ce dispositif de mémoire et par un circuit de commande sont mémorisées et qu'en fonction de ces identifications d'adresses de début et d'adresses de fin, les emplacements de mémoire du dispositif de mémoire qui se trouvent entre une paire d'adresses de début et d'adresses de fin soient rafraîchis dans le temps sous la commande d'un dispositif de rafraîchissement, les emplacements de mémoire du dispositif de mémoire qui se trouvent à l'extérieur d'une paire d'adresses de début et d'adresses de fin ne subissant pas de rafraîchissement.

2. Module de mémoire selon la revendication 1, caractérisé en ce que le dispositif de mémoire nécessitant un rafraîchissement est formé par un dispositif RAM dynamique.

3. Module de mémoire selon la revendication 1, caractérisé en ce que le dispositif de mémoire nécessitant un rafraîchissement est composé d'au moins deux blocs de mémoire qui peuvent réagir en tant que blocs de manière arbitraire et sont formés par des mémoires de transfert de charge.

4. Module de mémoire selon l'une quelconque des revendications précédentes, caractérisé en ce que les autres dispositifs de mémoire pour la mémorisation des identifications d'adresses du début et d'adresses de fin sont formés par un jeu de registres séparés.

5. Module de mémoire selon la revendication 2, caractérisé en ce que les autres dispositifs de mémoire pour la mémorisation des identifications d'adresses de début et d'adresses de fin sont constitués par des emplacements de mémoire réservés du dispositif RAM dynamique, dont les contenus de mémoire sont transmis l'un derrière l'autre dans un verrou, qui commande pour sa part le dispositif de rafraîchissement.

6. Module de mémoire selon la revendication 5, caractérisé en ce que les emplacements de mémoire réservés se trouvent dans des adresses prédéterminées empilées de manière uniforme du dispositif RAM dynamique.

7. Module de mémoire selon l'une quelconque des revendications précédentes, caractérisé en ce qu'un signal d'effacement peut être acheminé au circuit de commande via une entrée séparée pour effacer les identifications d'adresses de début et d'adresses de fin mémorisées dans les autres dispositifs de mémoire.

8. Module de mémoire selon l'une quelconque des revendications précédentes, caractérisé en ce que le module de mémoire se présente sous la forme d'une carte à puce.

9. Utilisation d'un module de mémoire selon l'une quelconque des revendications précédentes dans un appareil de traitement d'informations qui se présente sous la forme d'un appareil à dicter, étant entendu que les signaux d'informations à mémoriser sont des signaux vocaux, qui sont convertis en signaux numériques pour leur mémorisation dans le module de mémoire.
